# EUROPÄISCHE PATENTSCHRIFT

(11) **EP 2 550 092 B1**
(45) Veröffentlichungstag und Bekanntmachung des Hinweises auf die Patenterteilung: **15.08.2018**
(21) Anmeldenummer: 11718264.2
(22) Anmeldetag: 21.03.2011
(51) Int. Cl.: B01J 2/04, B01J 2/06

(54) **VERFAHREN ZUR HERSTELLUNG VON MIKRO- ODER NANOPARTIKELN**
PROCESS FOR THE PRODUCTION OF MICRO- OR NANOPARTICLES
PROCEDE POUR LA PRODUCTION DE MICRO- OU NANOPARTICULES

(30) Priorität: 22.03.2010 DE 102010010996
(43) Veröffentlichungstag der Anmeldung: 30.01.2013
(73) Patentinhaber: Instillo GmbH, 66740 Saarlouis (DE)
(72) Erfinder: BAUMSTÜMMLER, Bernd, 66740 Saarlouis (DE); PENTH, Bernd, 66822 Lebach (DE); PENTH, Felix, 66822 Lebach (DE); TÜRELI, Akif Emre, 66470 Saarlouis (DE)
(74) Vertreter: Vièl, Christof
(86) Internationale Anmeldenummer: PCT/DE2011/075044
(87) Internationale Veröffentlichungsnummer: WO 2011/116763

(56) Entgegenhaltungen:
- WO-A1-2005/041970
- WO-A1-2009/020434
- DE-A1-102005 048 201
- DONG Y ET AL: "A continuous and highly effective static mixing process for antisolvent precipitation of nanoparticles of poorly water-soluble drugs", INTERNATIONAL JOURNAL OF PHARMACEUTICS, ELSEVIER BV, NL, Bd. 386, Nr. 1-2, 15. Februar 2010 (2010-02-15), Seiten 256-261, XP026857248, ISSN: 0378-5173 [gefunden am 2009-11-13]

## Beschreibung

Die Erfindung betrifft ein Verfahren zur Herstellung von Mikro- oder Nanopartikeln wasserlöslicher und wasserunlöslicher Substanzen durch kontrollierte Fällung, Co-Fällung und Selbstorganisationsprozesse in Mikrojetreaktoren, wobei ein Lösungsmittel, das mindestens ein Zielmolekül enthält, und ein Non-Solvent als aufeinandertreffende Strahlen mit definierten Drücken und Flußraten in einem Mikrojetreaktor gemischt werden, wobei eine sehr schnelle Fällung, eine Co-Fällung oder eine chemische Reaktion erfolgt, im Rahmen derer Mikro- oder Nanopartikel entstehen.

Eine Vielzahl von Industriezweigen, insbesondere der Bereich der Medizin und Pharmazie, verzeichnen einen hohen Bedarf an Mikronisierung oder Nanoisierung von großen Partikeln. Besonders im Bereich der Pharmazie werden solche Methoden immer häufiger benutzt, um die Bioverfügbarkeit von Wirkstoffen zu erhöhen, oder um einen oder mehrere Wirkstoffe gezielt an seinen Wirkort zu bringen.

Unter Bioverfügbarkeit versteht man dabei den Grad, in dem ein Wirkstoff dem Zielgewebe nach seiner Verabreichung zur Verfügung gestellt werden kann. Es sind viele Faktoren bekannt, die die Bioverfügbarkeit beeinflussen können, wie beispielsweise die Löslichkeit der Substanz in Wasser, die Freisetzungsrate oder die Partikelgröße. Somit kann die Bioverfügbarkeit durch Mikronisierung oder Nanoisierung im Falle schlecht wasserlöslicher Substanzen entweder durch die Erhöhung der Löslichkeit oder der Freisetzungsrate verbessert werden.

Eine andere Möglichkeit zur Erhöhung der Bioverfügbarkeit stellt das sogenannte "drug targeting" oder das "drug delivery" dar, welches auf der Verteilung der Partikel im Zielgewebe entsprechend ihrer Partikelgröße oder durch einen Aufbau der Partikel dergestalt beruht, dass sie über geeignete Oberflächenmodifikationen verfügen, die sie in die Lage versetzen, gezielt den Ort der Absorption oder Wirkung zu erreichen.

Solche Verfahren zur Herstellung von Mikropartikeln und Nanopartikeln werden in verschiedenen Patentanmeldungen und Patenten, beispielsweise der US 5,833,891 A, der US 5,534,270 A, der US 6,862,890 B, der US 6,177,103 B, der DE 10 2005 053 862 A1, der US 5,833,891 A, der US 5,534,270 A, der US 6,862,890 B, der US 6,177,103 B, der DE 10 2005 017 777 A1 und der DE 10 2005 053 862 A1 beschrieben.

In der WO 02/60275 A1 werden zur Herstellung von Nanopartikeln Verfahren beschrieben, bei denen zwei nicht mischbare Flüssigkeiten zur Erreichung einer Verkapselung elektrisch geladen werden. In diesem Falle ist die Verwendung toxischer Substanzen nicht ausgeschlossen, was zu einem beträchtlichen Einfluß auf die Produktqualität führen kann. Weiterhin ist es mit diesem Verfahren nicht möglich, die Partikelgröße zu kontrollieren.

In der US 2009/0214655 A1 werden wiederum zwei nicht mischbare Flüssigkeiten verwendet und obwohl dort zur Herstellung der Nanopartikel ein Mikroreaktor zum Einsatz kommt, wird hier nur die Herstellung von Emulsionen beschrieben. Darüber hinaus findet die Herstellung in einem flüssigkeitsgefüllten Raum statt, in dem es wiederum nicht möglich ist, die Partikelgröße oder -eigenschaften zu kontrollieren und weiterhin kann es aufgrund der Tatsache, daß die Reaktionen in Mikrokanälen durchgeführt werden, leicht zu Verblockung der Vorrichtung kommen.

Die bekannten Techniken für die Herstellung von Nanopartikeln weisen jedoch viele Nachteile auf.

Sogenannte "Top-down"-Techniken, die meist mechanische Zerkleinerungsverfahren umfassen, wie trockenes oder nasses Mahlen, bergen die Gefahr mikrobieller Kontamination, Kontamination durch Abrieb der Mahlkugeln oder Degradierung des Wirkstoffes, insbesondere, weil es für die Mikronisierung des Wirkstoffes sehr langer Mahlzeiten bedarf. Dennoch sind im Falle des trockenen Mahlens selbst nach sehr langen Mahlzeiten nur kleinste Partikelgrößen von etwa 100 Mikrometer erreichbar.

Es gibt eine Reihe von sogenannten "Bottom-up"-Ansätzen zur Produktion von Nanopartikeln, wie das Aussalzen, die Emulgierung, die Lösungsmittelverdampfung oder die Sprühverdampfung von superkritischen Flüssigkeiten.

Ungeachtet, welchen dieser Ansätze man verfolgt, um pharmazeutische Nanopartikel herzustellen, erreicht man in jedem Falle ein Vergrößerung der Oberfläche im Vergleich zu Partikeln mit einer Größe von mehr als 1 µm.

Die Vergrößerung der Oberfläche und der Oberflächeninteraktionen kann die Freisetzungsrate positiv beeinflussen und es ermöglichen, die pharmakokinetischen Eigenschaften eines Medikamentes zu kontrollierten. Dennoch sind den meisten dieser Verfahren dadurch Grenzen gesetzt, daß sie einen hohen Energieeinsatz erfordern, einen geringen Erfolg bringen, Probleme im "upscaling" (Übergang vom Laborexperiment zur industriellen Produktion) zeigen, es schwierig ist, Partikelgröße und -eigenschaften zu kontrollieren, relativ toxische, organische Lösungsmittel benutzt werden müssen oder die Methoden selbst schwierig durchzuführen sind. Diese Faktoren limitieren ihren Einsatz für die kommerzielle Produktion von Nanopartikeln.

Unter diesen verschiedenen Methoden wurde die Nano-Fällung oder Lösungsmittelaustausch-Methode in der US 5,118,529 A beschrieben. Diese relativ einfache Methode schließt die Bildung von Nanopartikeln mittels einer Solvent-Nonsolvent Fällung in einem Schritt mit ein. Im Idealfall wird das Polymer und der Wirkstoff im selben Lösungsmittel gelöst, um dann beim Kontakt mit dem Nonsolvent (meist Wasser) als Nanopartikel auszufallen.

Die schnelle Bildung von Nanopartikeln wird durch den Maragoni-Effekt als Resultat der Verwirbelungen am Kollisionspunkt des Solvents mit dem Non-Solvent und der Diffusion des Solvents in das Non-Solvent bedingt.

Die Fällung resultiert in der Produktion von Nanopartikeln in der Größenordnung von 100 bis 300 nm mit relativ enger Partikelgrößenverteilung unter Verwendung verschiedener Polymere. Oberflächenmodifikatoren werden dabei nicht in allen Fällen benötigt. Als Lösungsmittel werden normalerweise nur nicht giftige Lösungsmittel verwendet.

Der beschriebene Stand der Technik offenbart, daß insbesondere in der pharmazeutischen Industrie neuartige Methoden benötigt werden, die alle Nachteile, die mit den oben dargestellten konventionellen Methoden verbunden sind, vermeiden.

In der DE 10 2009 008 478 A1 wird ein Verfahren beschrieben, in dem eine Solvent-/Anti-Solvent-Fällung mit einer in-situ Sprühtrocknung in Anwesenheit von oberflächenaktiven Molekülen erfolgt, wobei ein Mikrojetreaktor entsprechend der EP 1 165 224 B1 zum Einsatz kommt. Ein solcher Mikrojetreaktor weist mindestens zwei Düsen mit jeweils zugeordneter Pumpe und Zufuhrleitung zum Spritzen jeweils eines flüssigen Mediums in einen von einem Reaktorgehäuse umschlossenen Reaktorraum auf einen gemeinsamen Kollisionspunkt auf, wobei eine erste Öffnung in dem Reaktorgehäuse vorgesehen ist, durch die ein Gas, eine verdampfende Flüssigkeit, eine kühlende Flüssigkeit oder ein kühlendes Gas zur Aufrechterhaltung der Gasatmosphäre im Reaktorinneren, insbesondere im Kollisionspunkt der Flüssigkeitsstrahlen, bzw. zur Kühlung der entstehenden Produkte einleitbar ist, und eine weitere Öffnung zum Entfernen der entstehenden Produkte und von überschüssigem Gas aus dem Reaktorgehäuse vorgesehen ist. Es wird also über eine Öffnung in den Reaktorraum ein Gas, eine verdampfende Flüssigkeit oder ein kühlendes Gas zur Aufrechterhaltung einer Gasatmosphäre im Reaktorinneren, insbesondere im Kollisionspunkt der Flüssigkeitsstrahlen, bzw. zur Kühlung der entstehenden Produkte eingeleitet und die entstehenden Produkte und überschüssiges Gas durch eine Öffnung aus dem Reaktorgehäuse durch Überdruck auf der Gaseintrittsseite oder durch Unterdruck auf der Produkt- und Gasaustrittsseite entfernt.

In der DE 10 2009 008 478 A1 wird der Wirkstoff in einer wassermischbaren, organischen Phase gemeinsam mit einem oberflächenaktiven Molekül gelöst. Diese organische Lösung und Wasser, das als Non-Solvent dient, werden mit Hilfe von zwei Pumpen durch jeweils eigene Kapillaren aus rostfreiem Stahl mit konstanter Flußrate und Druck gepumpt und kollidieren im Mikroreaktor (dem sogenannten "Microjet-Reaktor") als "impinging jets" miteinander. Lösungsmittel und Non-Solvent werden darin sehr schnell vermischt, wobei der Wirkstoff als Nanopartikel ausfällt und die so entstehende Nanopartikel-Suspension aus dem MicroJet-Reaktor entweder mit hoch erhitzter Druckluft oder einem Inertgas ausgetrieben wird.

Das Gas verdampft dabei das organische Lösungsmittel und das Wasser, wobei die Wirkstoff-Nanopartikel mit den oberflächenmodifizierenden Molekülen beschichtet sind, nachdem beide flüssigen Phasen verdampft sind. Am Ende des Verfahrens liegen die Nanopartikel als Pulver vor.

Essentielles Element in der DE 10 2009 008 478 A1 ist also die Nutzung erhitzter Luft oder Inertgas gemeinsam mit einem Oberflächenmodifikator dergestalt, daß während der Fällung des Wirkstoffes das Lösungsmittel und das Non-Solvent verdampft werden und die Oberflächenmodifikatoren die Nanopartikel umhüllen, um so die weitere Aggregation der Partikel und das Oswald-Wachstum zu verhindern.

Obwohl durch das in der DE 10 2009 008 478 A1 beschriebene Verfahren effizient die Partikelgröße kontrolliert werden kann, bedeutet die Notwendigkeit des Einsatzes von Oberflächenmodifikatoren eine Einschränkung bei der Nutzung der Technologie für verschiedene Produktionsstrategien von Mikropartikeln oder Nanopartikeln.

Die DE 10 2005 048 201 A1 beschreibt ein Verfahren und eine Vorrichtung zur kontinuierlichen Fällung von nanoskaligen Partikeln in einem verstopfungsfreien Mikroreaktor durch Kollision von Reaktandenstrahlen und der definierbaren, zeitnahen Zugabe von oberflächenmodifizierenden Reagenzien.

Aufgabe der Erfindung ist es somit, ein Verfahren gemäß dem Oberbegriff zu schaffen, bei dem die Partikelgröße der resultierenden Mikropartikel bzw. Nanopartikel gezielt gesteuert werden kann. Dabei sollen diese eine enge Größenverteilung aufweisen und ebenfalls die Herstellung von oberflächenmodifizierten Formulierungen zur Anwendung im Drug Delivery und Drug Targeting ermöglichen.

Diese Aufgabe wird erfindungsgemäß dadurch gelöst, daß die Partikelgröße durch die Temperatur, bei der die Kollision des Lösungsmittels mit dem Non-Solvent erfolgt, die Flußrate des Lösungsmittels und des Non-Solvents und/oder den Gasdruck im Reaktorraum des Mikrojetreaktors gesteuert wird, wobei bei niedrigeren Temperaturen, hoher Flußrate von Lösungsmittel und Non-Solvent bzw. Reduzieren des Gasdrucks im Reaktorraum kleinere Partikelgrößen erhalten werden.

Hierbei ist es sowohl möglich, die Partikelgröße allein durch die Temperatur, allein durch die Flußrate oder allein durch den Gasdruck oder durch beliebige Kombinationen der drei Parameter zu steuern.

Es liegt im Rahmen der Erfindung, daß das Zielmolekül ausgewählt ist aus der Gruppe bestehend aus biologisch nutzbaren Substanzen, bildgebenden Substanzen, kosmetischen Substanzen, Farbstoffen, Pigmenten, Lebensmitteln, Lebensmittelzusatzstoffen, Nahrungsergänzungsmitteln, Biozide, Insektizide, Fungizide, Pestizide, Herbizide, pharmazeutisch nutzbaren Substanzen, insbesondere Humanarzneimitteln oder Tierarzneimitteln.

Eine Weiterbildung der Erfindung besteht darin, daß der Non-Solvent mindestens ein Hilfsadditiv enthält.

Der Non-Solvent kann aber auch ausschließlich aus Wasser bestehen.

In diesem Zusammenhang hat es sich als vorteilhaft erwiesen, daß das Gewichtsverhältnis von Zielmolekül zum Hilfsadditiv mindestens 1:100 beträgt.

Bei einer bevorzugten Ausgestaltung der Erfindung ist vorgesehen, daß das Lösungsmittel und der Non-Solvent anschließend aus der resultierenden Suspension verdampft werden.

Im Rahmen der Erfindung wurde überraschenderweise festgestellt, daß die Partikelgröße maßgeblich durch die Temperatur, bei der die Kollision der Flüssigkeiten stattfindet, gezielt gesteuert werden kann. Zu abnehmenden Partikelgrößen gelangt man dabei durch niedrigere Temperaturen. Ebenso gelangt man zu abnehmenden Partikelgrößen durch Reduzieren der Gasmenge im Reaktorraum bis hin zur völligen Abwesenheit von Gas im Reaktorraum.

Hintergrund der vorliegenden Erfindung war ebenfalls die überraschende Erkenntnis, daß mit steigender Luftmenge die Interaktionen der sich bildenden Diffusionsschichten so beeinflußt werden können, daß letztlich bei vielen Anwendungen größere Nanopartikel entstehen können und es dementsprechend in einigen Fällen zu unerwünschtem Kristallwachstum kommen kann. Umgekehrt wurde überraschenderweise festgestellt, daß das völlige Fehlen von Luft oder Inertgas zur Bildung kleinerer Partikel führte. Für den Fall, daß kein Gasstrom eingesetzt wird, endet die schnelle Fällung der Partikel offenbar bereits, sobald die Flüssigkeitsströme den äußeren Rand der Flüssigkeitsscheibe erreichten, die durch die Kollision der Flüssigkeitsströme als "impinging jets" gebildet wird. Dies resultiert vermutlich in einem früheren Ende des Partikelwachstums und in kleineren Partikeln mit einer homogenen Größenverteilung.

Der Effekt des Gasflusses zusammen mit dem Umstand des Erhitzens zur Verdampfung des Lösemittels kann in Bezug auf die Partikelgröße vorläufig folgendermaßen erklärt werden.

Bei niedriger Temperatur ist die Löslichkeit herabgesetzt und die Metastabilitätszone wird eng, dergestalt, daß leicht eine Übersättigung erreicht werden kann, wenn das Solvent in das Anti-Solvent injiziert wird.

Der Nukleationsprozeß ist ein Prozeß des Verlustes freier Energie und setzt Wärme frei, damit wird eine hohe Nukleationsrate bei tiefen Temperaturen begünstigt.

Eine niedrigere Temperatur kann das Partikelwachstum inhibieren. Deshalb werden auf Grund der hohen Nukleationsrate und langsamen Wachstumsrate bei niedrigerer Temperatur Partikel geringerer Größe gebildet.

Die Erkenntnis, daß bei ansteigender Temperatur die Partikelgröße und der Grad der Aggregation ebenfalls zunimmt, kann aus dem Umstand abgeleitet werden, daß sich die Substanz oder der Hilfsstoff mit steigender Temperatur näher an ihrer Glas-Transitions-Temperatur befindet.

Ebenso kann die Partikelgröße über die Flußrate von Lösungsmittel und Non-Solvent gesteuert werden, wobei bei einer hohen Flußrate kleine Partikel und bei einer kleinen Flußrate große Partikel erzielt werden.

Der Ausdruck Fällungsreaktor oder Microjetreaktor schließt alle Geometrien wie in der EP 1 165 224 B1 und der DE 10 2009 008 478 A1 beschrieben mit ein.

An dieser Stelle ist es wichtig zu erwähnen, daß ein ohne Luft betriebener "Microjet-Reaktor", wie er aus der EP 1 165 224 B1 bekannt ist, für die gestellte Aufgabe nicht durch einen herkömmlichen Mikroreaktor ersetzt werden kann, da die Mischung mit einem konventionellen Mikroreaktor, beispielsweise als T-Mischer ausgeführt, zu wesentlich höheren Mischzeiten führt, weil diese regelmäßig im laminaren Bereich arbeiten. Für die Durchführung des erfindungsgemäßen Verfahrens kann der Mikrojetreaktor auch so ausgeführt werden, daß die Flüssigkeitsstrahlen sich in einem Winkel begegnen, der von 180° abweicht oder daß die Strahlen auf einer gemeinsamen Prallfläche durchmischt werden. Allerdings steigt in diesen Fällen die erreichbare Partikelgröße.

Weiterhin kann festgestellt werden, daß der Mikrojetreaktor der einzige Reaktor ist, bei dem die Präzipitation oder andere Arten von Reaktionen frei in einem gasgefüllten Raum vollzogen werden. Dadurch wird es möglich, durch die Änderung der Prozeßparameter wie Temperatur, Druck oder Durchflußrate die Partikelgröße zu bestimmen. Aufgrund der Tatsache, daß die Reaktion in einem freien Raum stattfindet, ist es unmöglich, daß Produkte oder Nebenprodukte den Reaktor blockieren und so zu einem Stillstand es gesamten Systems führen können.

Nanopartikel- oder Mikropartikel-Formulierungen werden erfindungsgemäß auch für das Drug Targeting und das Drug Delivery hergestellt. Dazu ist es notwendig, wasserlösliche Substanzen mit geeigneten Hilfsadditiven zu nano- oder mikropartikulären Systemen zu formulieren. In bisherigen Verfahren war es jedoch nur möglich, wasserunlösliche Wirkstoffe zu formulieren, deren Produktion ausschließlich auf der Fällung solcher Partikel auf Grund ihrer schlechten Löslichkeit bei hohen Temperaturen unter der Verwendung erhitzten Inertgases oder Luft beruhte.

Im vorliegenden Versuchsaufbau, in dem während des Betriebszyklus bevorzugt kein Gasstrom verwendet wird, ist es dagegen auch möglich, Nanopartikel von wasserlöslichen Molekülen herzustellen und dies bei gleichzeitiger Erniedrigung der Temperaturen der als Non-Solvent benutzten Flüssigkeit, des Microjetreaktors und/oder des die Substanz enthaltenden Solvents dergestalt, daß die Löslichkeit der fraglichen Substanz in der Solvent-/Non-Solvent Mischung ebenfalls erniedrigt ist, so daß die Substanz als Nanopartikel ausfällt, wobei sie im folgenden unter Verwendung eines zweiten Microjetreaktors, der in einem 2-Schritt-Verfahren direkt an den ersten Microjetreaktor gekoppelt ist, mit einem geeigneten Hilfsstoff beschichtet werden kann. Die entstehenden Nanopartikel können mit Hilfsadditiven oder biologisch aktiven Substanzen durch Absorption oder Integration an der Oberfläche beschichtet werden, beispielsweise um sie magensaftresistent oder mucoadhäsiv zu formulieren.

Die bei der Fällung entstehenden Partikel können vorzugsweise unmittelbar nach der Fällung (z.B. innerhalb von 0,1 bis 5 s) in einem zweiten kaskadierenden Microjetreaktor oder später einer mechanischen Behandlung unterzogen werden. Diese mechanische Behandlung kann mittels Ultraschall, mittels Pressen der Dispersion unter Druck durch Düsen oder durch starkes Rühren, beispielsweise mittels eines Ultra-Turrax oder als "Impinging Jets" (aufeinandertreffende Strahlen) durch einfache oder mehrfache Behandlung erfolgen. Auf diese Weise können die Partikel in einem kontinuierlichen Prozeß stabilisiert werden.

Es ist auch möglich, mit dem erfindungsgemäßen Verfahren magnetische Partikel zu erzeugen.

Weiterhin ist es ebenfalls möglich, hoch wasserlösliche Substanzen durch einen Selbstorganisationsprozeß als Nanopartikel auszufallen, indem die unlöslichen Derivate nach einer Reaktion wie einer Neutralisation oder einer Aussalzung, die im Microjetreaktor stattfindet, gefällt werden. Ein aktives Zielmolekül kann beispielsweise durch die Reaktion mit einem oder mehreren Hilfsadditiven gefällt werden, so daß Partikel entstehen, die in der Solvent-/Non-Solvent-Mischung unlöslich sind. Es ist ebenfalls möglich, daß ein aktives Zielmolekül mit dem unlöslichen Reaktionsprodukt zweier oder mehrerer Hilfsadditive cogefällt wird.

Ein weiterer Vorteil des Fehlens von erhitzten Gasen ist dadurch gegeben, daß empfindliche Moleküle einschließlich, aber nicht beschränkt auf Proteine, Peptide, biologische Marker und Biopharmazeutika, ebenfalls formuliert werden können und zwar ohne den Verlust ihrer biologischen Aktivität.

Die vorliegende Erfindung ermöglicht ebenfalls die Co-Fällung einer schlecht löslichen Substanz mit einem pharmazeutischen Hilfsstoff ohne Surfactant und die Oberflächenmodifikation solcher Nanopartikel mit biologisch aktiven Molekülen zur Anwendung im Drug Delivery und Drug Targeting.

Damit wird die Aufgabe der hier vorliegenden Erfindung, ein Verfahren und eine Vorrichtung zur Verfügung zu stellen, die es erlauben, basierend auf einer Solvent-/Non-Solvent Fällung unter Verwendung eines Microjetreaktors stabilisierte Nanopartikel oder Mikropartikel als Suspensionen aus wasserlöslichen und wasserunlöslichen Substanzen mit hoher Ausbeute zu erzeugen, gelöst. Dabei ist es kennzeichnend, daß diese eine enge Größenverteilung aufweisen und ebenfalls die Herstellung von oberflächenmodifizierten Formulierungen zur Anwendung im Drug Delivery und Drug Targeting ermöglichen. Der apparative Aufbau ermöglicht eine prozeßoptimierte Herstellung durch die Verwendung statistischer Versuchsplanung und der automatisierten Parametrisierung in Verbindung mit einer Online-Größenbestimmung der Partikel.

Das Verfahren ist robust, skalierbar und anwendbar auf eine Vielzahl von wasserlöslichen und wasserunlöslichen Stoffen einschließlich biologischer Stoffe.

Nachfolgend wird die Erfindung näher erläutert.

Es zeigen
- FIG. 1: den Aufbau mit Luftzuführung zur Produktion von Mikropartikeln und Nanopartikeln,
- FIG. 2: den Aufbau ohne Luftzuführung zur Produktion von Mikropartikeln und Nanopartikeln,
- FIG. 3: den Effekt des Verhältnisses der Flussrate auf die Partikelgröße,
- FIG. 4: die Darstellung des Effektes der Temperatur auf die Partikelgröße, wobei die x-Achse die Temperatur in °C und die y-Achse die Partikelgröße in nm angibt,
- FIG. 5: die Darstellung des Effektes des Gasdruckes auf die Partikelgröße, wobei die x-Achse den Druck in bar und die y-Achse die Partikelgröße in nm angibt,

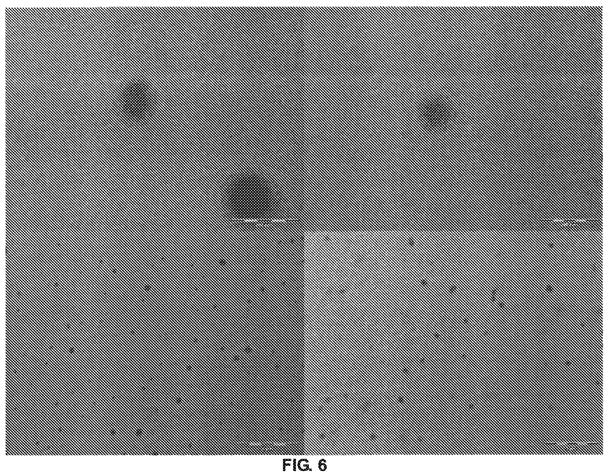

- FIG. 6: TEM-Bilder von Nanopartikeln, die mit dem Mikrojetreaktor hergestellt wurden,

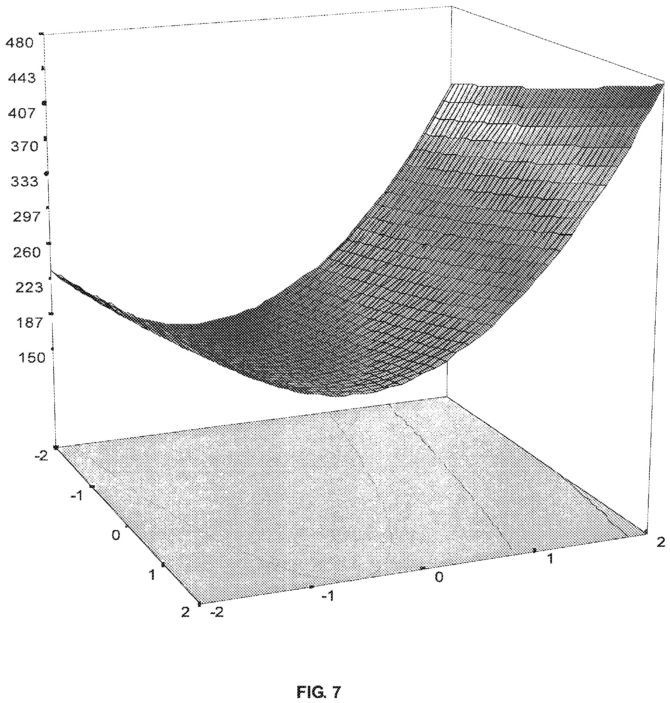

- FIG. 7: das 3D-Diagramm des Effektes von Gas und Temperatur auf die Partikelgröße, wobei die x-Achse die Temperatur in °C, die y-Achse die Partikelgröße in nm und die z-Achse den Druck in bar angibt.

Die vorliegenden Erfindung nutzt die kontrollierte Solvent-/Non-Solvent Fällung so, daß das Solvent und Non-Solvent-Ströme mit Flußraten von mehr als 0,1 ml/min als "impinging jets" (aufeinandertreffende Strahlen) kollidieren und zwar mit einer Geschwindigkeit größer als vorzugsweise 1 m/s, besser mehr als 50 m/s und mit einer Reynoldszahl von mehr als 100, vorzugsweise von mehr als 500. Lösungsmittel und Non-Solvent werden in Düsen zu Strahlen geformt, die bevorzugt kleiner als 1000 µm sind, besonders bevorzugt kleiner als 500 µm, am besten jedoch kleiner als 300 µm mit Drücken von normalerweise 1 bar, bevorzugt mehr als 10 bar und besonders bevorzugt mehr als 50 bar, wobei der Druck bei dem vorliegenden Verfahren über Druckregler geregelt wird.

Diese beiden "impinging jets" kollidieren im Microjetreaktor dergestalt, daß die Fällung am Punkt des Zusammentreffens der Strahlen erfolgt, die dort, abhängig von der Geometrie des Reaktors, eine doppelt-tellerförmige Struktur aus schnell bewegten Flüssigkeitsströmen ausbilden, in deren "Tellerrandbereich" eine sehr schnelle Durchmischung stattfindet, normalerweise mit Mischgeschwindigkeiten unter 1 Millisekunde, häufig unter 0,5 Millisekunden, meist unter 0,1 Millisekunden.

In der vorliegenden Erfindung bedeutet der Begriff Solvent ein Lösungsmittel mit einer oder mehreren darin enthaltenen, aktiven Zielsubstanzen zusammen mit einem oder mehreren Hilfsadditiven, einschließlich, aber nicht beschränkt auf pharmazeutische Hilfsstoffe, Surfactant-Moleküle, Polymere, Co-Polymere oder Blockpolymere.

Der Begriff Non-Solvent bedeutet ebenfalls ein Lösungsmittel mit einer oder mehreren darin enthaltenen, aktiven Zielsubstanzen oder Hilfsadditiven, die zur Herstellung von Nanopartikeln oder Mikropartikeln Verwendung finden.

Diese Flüssigkeiten können erhitzt oder gekühlt werden und zwar durch eine externe Heizung oder aber direkt in der Pumpe, um die Lösung der aktiven Zielsubstanz und/oder der Hilfsadditive zu ermöglichen oder um die Bildung von Nanopartikeln mit der gewünschten Partikelgröße und Oberflächeneigenschaften möglich zu machen oder aber, um die entstandenen Moleküle zu stabilisieren.

Die vorliegende Erfindung schließt Verfahren zur Herstellung von Partikeln aus wasserlöslichen oder wasserunlöslichen Substanzen mittels eines Microjetreaktors bei gleichzeitiger Stabilisierung dieser entweder mit einer oder mehreren Hilfsadditiven oder Oberflächenmodifikatoren und einer resultierenden Partikelgröße von bis zu 2.000 nm, bevorzugt unter 1000 nm, besonders bevorzugt unter 500 nm und am besten kleiner als 200 nm mit Polydispersionsindices normalerweise unter 2,0, bevorzugt unter 1,0 und besonders bevorzugt unter 0,4 mit ein.

Alternativ schließt eine andere Ausführung der Erfindung ein Verfahren und eine Apparatur mit ein, die es ermöglichen, Selbstorganisationsprozesse, in denen ein oder mehrere aktive Zielmoleküle mit einem oder mehreren geeigneten Hilfsadditiven, die im Non-Solvent löslich sind, chemisch reagieren und so in einem Produkt resultieren, das nicht löslich in der Solvent-/Non-Solvent Mischung ist und damit die Bildung von Mikropartikeln oder Nanopartikeln mit verschiedenen Größen ermöglicht, abhängig von Parametern, einschließlich, aber nicht begrenzt auf Flußrate oder Konzentration der Substanzen.

Ebenfalls möglich ist die Co-Fällung einer oder mehrerer aktiver Zielsubstanzen mit einem nicht löslichen Reaktionsprodukt eines oder mehrerer Hilfsadditive.

Die vorliegende Erfindung schließt weiterhin Verfahren zur Co-Fällung eines oder mehrerer aktiver Zielsubstanzen mit einem oder mehreren geeigneten Hilfsadditiven, bei denen die Substanz im Hilfsadditiv in einer molekularen Größenordnung dergestalt gelöst ist, daß sie partikuläre Systeme bilden und das Beschichten der Oberflächen solcher Systeme mit geeigneten Zielmolekülen, einschließlich, aber nicht beschränkt auf Antikörper, mit ein.

Bei den oben genannten aktiven Zielsubstanzen sind biologisch nutzbare Substanzen, Substanzen zur Bildgebung, pharmazeutisch nutzbare Substanzen, kosmetisch nutzbare Substanzen, Substanzen aus dem Bereich Lebensmittel oder Nahrungsergänzung und insbesondere Medikamente für den menschlichen Bedarf sowie Tierarzneimittel mit eingeschlossen.

Das Solvent und Non-Solvent sind Lösungen und Mischungen als flüssige Komponenten, die ihren Massenteil sowohl in Lösung oder als Suspension enthalten können.

Das Solvent und Non-Solvent, die in der vorliegenden Erfindung genutzt werden, können eine wäßrige oder organische Phase oder Lösung, Mischung, Emulsion oder Suspension sein oder aber eine Kombination hiervon.

Solche organischen Lösungsmittel können wassermischbar oder nicht mit Wasser mischbar sein. Geeignete organische Lösungsmittel schließen ein, sind aber nicht beschränkt auf gut wassermischbare Substanzen, wie Ethanol, Methanol, Tetrahydrofuran, Dimethylsulfoxid, Aceton, 2-Isopropanol und schlechter mischbare Substanzen, wie Toluol, Hexan, Heptan, Pentan und Methylenchlorid.

Geeignete medikamentöse Zielmoleküle können aus einer Vielzahl bekannter Klassen von Medikamenten ausgewählt werden, einschließlich, aber nicht limitiert, auf Analgetika, entzündungshemmende Substanzen, Anthelminitika, antiarrhytmische Substanzen, Antibiotika (einschließlich Penicilline), Anticoagulantien, Antidepressiva, antidiabetische Substanzen, Antiepileptika, Antihistamine, antihypertensive Substanzen, Antimuskarinika, antimycobakterielle Substanzen, antineoplastische Substanzen, Immunsuppressiva, antithyroide Substanzen, antivirale Substanzen, anoxiolytische Sedativa (Hypnotika und Neuroleptika), Astringentia, Beta-Adrenorezeptor blockierende Substanzen, Blutprodukte und Blutersatzprodukte, inotrope Substanzen für das Herz, Kontrastmittel, Kortikosteroide, Husten unterdrückende Substanzen (Expektorantien und Mukolytika), diagnostische Substanzen, diagnostisch bildgebende Substanzen, Diuretika, dopaminerge Substanzen (Substanzen gegen Parkinson), Hämostatika, immunologische Substanzen, Substanzen zur Fettregulierung, Muskelrelaxantien, Parasympathomimetika, parathyroides Calcitonin und Biphosphonate, Prostaglandine, Radiopharmazeutika, Geschlechtshormone (einschließlich Steroide), antiallergische Substanzen, Stimulantien und Anorektika, Sympathomimetika, thyroide Substanzen, Vasodilatoren und Xanthine.

Die Wirkstoffe sind kommerziell erhältlich und/oder können durch der Fachwelt bekannte Techniken hergestellt werden. Sofern anwendbar, können die oben benannten Wirkstoffe entweder als freie Base oder als ein oder mehrere ihrer bekannten Salze eingesetzt werden.

Die oben benannten Wirkstoffe können so verarbeitet werden, daß sie in einer Vielzahl verschiedener pharmazeutischer Kompositionen und Formulierungen eingesetzt werden können, wie beispielsweise zur oralen Verabreichung als Tabletten, Kapseln oder Suspensionen, zur pulmonalen oder nasalen Verabreichung, topische Verabreichung als Emulsionen, Salben oder Cremes, parenterale Verabreichung als Suspensionen, Mikroemulsionen oder Depotformulierungen.

Dabei können geeignete Hilfsadditive beigefügt werden, wie beispielsweise inerte Verdünnungsmittel, lösungsvermittelnde Substanzen, suspendierende Substanzen, Adjuvantien, benetzende Substanzen, süßende, parfümierende Substanzen oder Geschmacksstoffe, isotonische Substanzen, colloidale Dispergentien und Surfactans einschließlich aber nicht begrenzt auf geladene Phospholipide, wie beispielsweise Dimyristoyl-Phosphatidyl-Glycerol, Algininsäure, Alginate, Akazienharz, arabisches Gummi, 1,3-Butylenglycol, Benzalkoniumchlorid, kolloidales Silikon-Dioxid, Cetosteraylalkohol, cetomacrogol emulgierendes Wachs, Casein, Kalziumstearat, Cetyl-Pyridinchlorid, Cetylalkohol, Cholesterol, Kalziumkarbonat, CRODESTAS F-110, welches eine Mischung aus Sucrosestearat und Sucrosedistearat ist (Croda Inc.), Tone, Kaolin und Bentonit, Derivate der Zellulose und ihre Salze wie beispielsweise Hydroxypropyl-Methylcellulose (HPMC), Natrium-Karboxymethylzellulose, Karboxymethylzellulose und ihre Salze, Methylzellulose, Hydroxyethylzellulose, Hydroxpropylzellulose, Hydroxypropylmethylzellulose-Phtalat, Nichkristalline Zellulose, Dikalziumphosphat, Dodecyl-Trimethyl-Ammoniumbromid, Dextran, Dialkylester des Natrium Sulfosuccinat (z.Bsp. AEROSEL OT, American Cynamid), Gelatine, Glycerol, Glycerol-Monostearat, Glukose, P-Isononylphenoxypoly(Glycidol), ebenfalls bekannt als OLIN 10-G oder Surfactant 10-GR (Olin Chemicals, Stamford, Conn.); Glucamide wie Oktanoyl-N-Methylglucamid, Decanoyl-N-Methylglucamid, Heptanoyl-N-Methylglucamid, Lactose, Lecithin(phosphatide), Maltoside wie n-Dodecyl-β-D-Maltosid, Mannitol, Magnesiumsterarat, Magnesium-AluminiumSilikate, Öle wie Baumwollöl, Saatöl, Olivenöl, Rizinusöl und Sesamöl; Paraffin, Kartoffelstärke, Polyethylen-Glycol (z. Bsp. CARBOWAX 3350 , CARBOWAX 1450 und CARBOPOL 9340 (Union Carbide)), Polyoxyethylen-Alkylester (z. Bsp. Macrogolether wie CETOMACROGOL 1000), Polyoxyethylen-Sorbit-Fettsäureester (z.Bsp. TWEENS, ICI Specialty Chemicals), Polyoxyethylen-Rizinusölderivate, Polyoxyethylen-Stearate, Polyvinylalkohol (PVA), Polyvinylpyrrolidon (PVP), Phosphate, 4-(1,1,3,3-tetramethylbutyl)-Phenol-Polymer mit Ethylenoxid und Formaldehyd (ebenfalls bekannt als TYLOXAPOL, SUPERIONE und TRITON), Poloxamere und Polaxamine (z.B. PLURONICS F68LF, F87, F108 und TETRONIC 908 beziehbar bei BASF Corporation, Mount Olive, N.J.), Pyranoside wie n-Hexyl-β-D-Glucopyranosid, n-Decyl-β-D-Glucopyranosid, n-Octyl-β-D-Glucopyranosid, quatäre Ammoniumverbindungen, Kieselsäure, Natriumzitrat, Stärken, Sorbitolester, Natriumcarbonat, feste Polyethylenglycole, Natriumdodecylsulfat, Natriumlaurylsulfat (z.Bsp. DUPONAL P, DuPont), Stearinsäure, Sucrose, Tapiokastärke, Talk, Thioglucoside wie n-Heptyl-β-D-Thioglucoside, Tragant, Triethanolamine, TRITON X-200 (Rohm und Haas); und ähnliche.

Die inerten Verdünnungsmittel, lösungsvermittelnden Substanzen, Emulsifikatoren, Adjuvantien, benetzende Substanzen, isotonischen Substanzen, colloidalen Detergentien und Netzmittel sind kommerziell erhältlich oder können nach den Fachleuten bekannten Methoden zubereitet werden.

Diese Hilfsstoffe, wie sie in der vorliegenden Erfindung benutzt werden, können potentiell ebenfalls eigene Aktivitäten besitzen, einschließlich antioxidative Moleküle, wobei diese Hilfsstoffe nicht auf die Gruppe der antioxidativen Moleküle beschränkt ist.

### Beispiele

### Beispiel 1

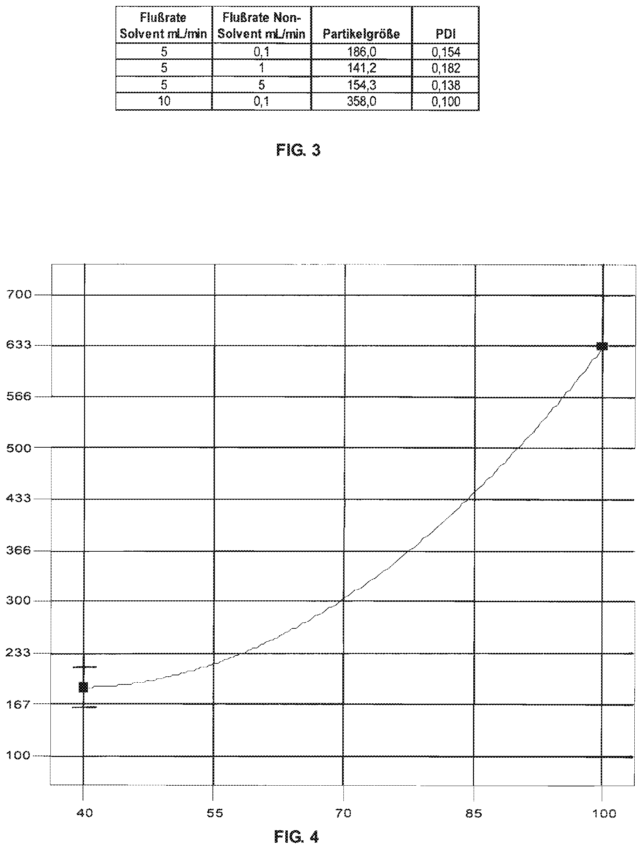

Nanopartikel wurden hergestellt, indem Nifedipin als Modell-Substanz und Eudragit S 100 als Modell-Hilfsadditiv benutzt wurden. Eudragit S 100 wurde in einer Konzentration von 10 mg/ml gemeinsam mit Nifedipin in einer Konzentration von 1 mg/ml in Aceton gelöst. Als Non-Solvent wurde Wasser benutzt. Die Temperatur des Solvents, Non-Solvents und des MicroJet- Reaktors wurden auf 40°C eingestellt. Partikel mit unterschiedlichen Partikelgrößen konnten durch Änderungen der Flußraten des Solvent und des Non-Solvents hergestellt werden. Die erhaltenen Partikelgrößen sind in der Tabelle (FIG. 3) dargestellt

### Beispiel 2

Nanopartikel wurde wie in Beispiel 1 beschrieben hergestellt, wobei jedoch bei unterschiedlichen Temperaturen die Flussraten für Solvent und Non-Solvent auf 10 ml/min fest eingestellt wurden um den Einfluss der Temperatur auf die Partikelgröße beobachten zu können. Die erhaltenen Partikelgrößen sind im Diagramm (FIG. 4) dargestellt. Die x-Achse gibt die Partikelgröße, die y-Achse die zugehörige Temperatur an. Mit der Erhöhung der Temperatur kann ein Ansteigen der Partikelgröße beobachtet werden.

### Beispiel 3

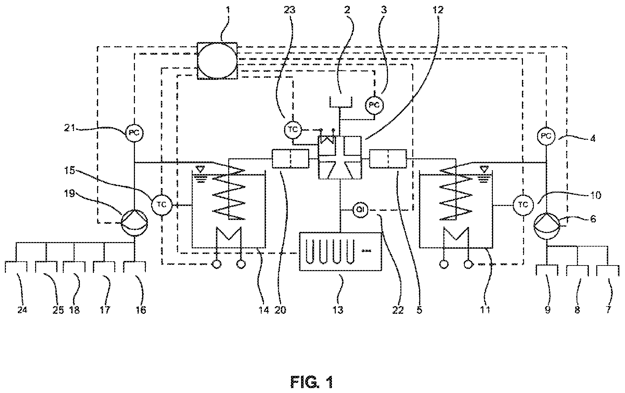

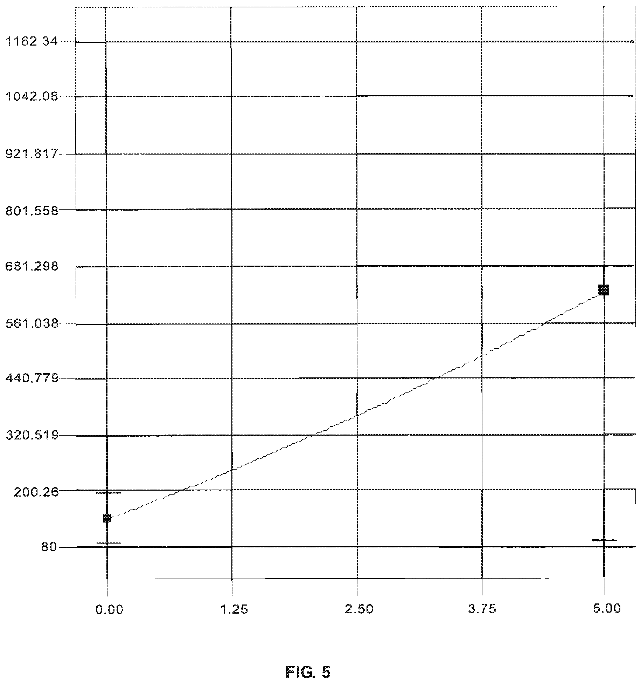

Nanopartikel wurden wie in Beispiel 1 beschrieben hergestellt, wobei jedoch bei unterschiedlichen Gasdrücken die Flußraten für Solvent und Non-Solvent auf 10ml/min fest eingestellt wurden, um den Einfluss des Gasdruckes auf die Partikelgröße beobachten zu können. Für dieses Experiment wurde dem Versuchsaufbau, wie er in Abbildung 1 beschrieben ist, eine zusätzliche Gaszufuhrleitung hinzugefügt, durch die inertes Stickstoffgas zugeführt werden konnte. Mit diesem Versuchsaufbau konnte eine Zunahme der Partikelgröße mit zunehmendem Gasdruck gezeigt werden. Die Ergebnisse des Experimentes aus diesem Beispiel sind im Diagramm (FIG. 5) dargestellt. Die x-Achse zeigt die Partikelgröße [nm], die y-Achse den Gasdruck [bar]. Dieses Beispiel zeigt, daß mit der Erhöhung des Gasdruckes ein Ansteigen der Partikelgröße beobachtet werden kann.

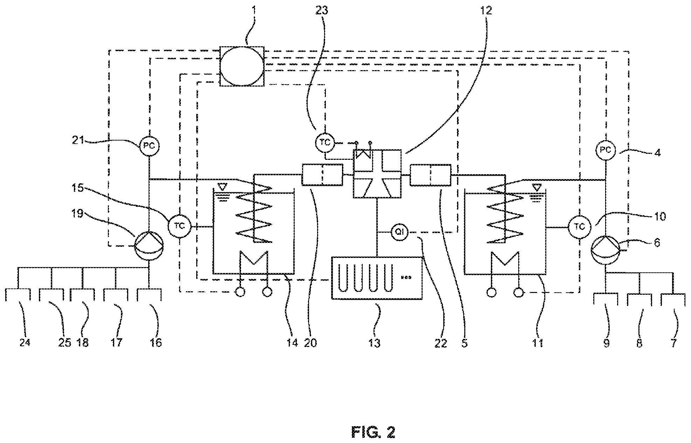

Ein beispielhafter Aufbau der erfindungsgemäßen Vorrichtung ist in den FIG. 1 und 2 dargestellt, wobei die Vorrichtung eine Rechen- und Steuereinheiteinheit (1), eine Luft- und Gaszuführung (2), einen Druckfühler für die Luft- Druckregelung (3), einen Druckfühler für Druckregelung (3; 21) der Reaktandenzuführung, einen Filter (5, 20), Pumpen (6, 19), einen Reaktandenbehälter Non-Solvent (7, 8, 9) und einen Reaktandenbehälter Solvent (16, 17, 18, 24, 25), eine Temperaturkontrolle (10, 15, 23), eine Heiz-/Kühleinheit mit Temperierbehälter (11, 14), einen Microjetreaktor (12), einen Produktausgang-Fraktionssammler (13) und eine Online-Partikelgrößenmessung (22) umfaßt.

### Beispiel 4

Nanopartikel wurden hergestellt, indem Fenofibrat als Modell-Substanz und Pluronic F68 als Modell-Hilfsadditiv benutzt wurden. Fluronic 68 wurde in einer Konzentration von 10 mg/ml gemeinsam mit Fenofibrat in einer Konzentration von 10 mg/ml in Ethanol gelöst. Als Non-Solvent wurde Wasser benutzt. Die Temperatur des Solvents, Non-Solvents und des Microjetreaktors wurden auf 40°C eingestellt. Die Partikelgröße konnte durch Änderungen der Flußraten des Solvent und des Non-Solvents auf 320 nm eingestellt werden, wobei wegen der Ostwald-Reifung die ausgefallenen Nanopartikel ohne zusätzliche Stabilisierung innerhalb von kürzester Zeit Agglomerate bilden. Die Partikelgröße der Agglomerate beträgt mehr als 1.000 nm. Durch die mehrfache Behandlung entweder in kaskadierten Mikrojetreaktoren oder durch erneuten Lauf in dem gleichen Mikrojetreaktor wurden die Partikel stabilisiert. Die Partikelgröße konnte bei 320 nm gehalten werden und veränderte sich nicht mehr mit der Zeit.

## Patentansprüche

1. Verfahren zur Herstellung von Mikro- oder Nanopartikeln wasserlöslicher und wasserunlöslicher Substanzen durch kontrollierte Fällung, Co-Fällung und Selbstorganisationsprozesse in Mikrojetreaktoren, wobei ein Lösungsmittel, das mindestens ein Zielmolekül enthält, und ein Non-Solvent als aufeinandertreffende Strahlen mit definierten Drücken und Flußraten in einem Mikrojetreaktor gemischt werden, wobei eine sehr schnelle Fällung, eine Co-Fällung oder eine chemische Reaktion erfolgt, im Rahmen derer Mikro- oder Nanopartikel entstehen, **dadurch gekennzeichnet, daß** die Partikelgröße der hergestellten Mikro- oder Nanopartikel durch die Temperatur, bei der die Kollision des Lösungsmittels mit dem Non-Solvent erfolgt, die Flußrate des Lösungsmittels und des Non-Solvents und/oder den Gasdruck im Reaktorraum des Mikrojetreaktors gesteuert wird, wobei bei niedrigeren Temperaturen, hoher Flußrate von Lösungsmittel und Non-Solvent bzw. Reduzieren des Gasdrucks im Reaktorraum kleinere Partikelgrößen erhalten werden.

2. Verfahren gemäß Anspruch 1, **dadurch gekennzeichnet, daß** das Zielmolekül ausgewählt ist aus der Gruppe bestehend aus biologisch nutzbaren Substanzen, bildgebenden Substanzen, kosmetischen Substanzen, Farbstoffen, Pigmenten, Lebensmitteln, Lebensmittelzusatzstoffen, Nahrungsergänzungsmitteln, Biozide, Insektizide, Fungizide, Pestizide, Herbizide, pharmazeutisch nutzbaren Substanzen, insbesondere Humanarzneimitteln oder Tierarzneimitteln.

3. Verfahren gemäß Anspruch 1, **dadurch gekennzeichnet, daß** der Non-Solvent mindestens ein Hilfsadditiv enthält.

4. Verfahren gemäß Anspruch 3, **dadurch gekennzeichnet, daß** das Gewichtsverhältnis von Zielmolekül zum Hilfsadditiv mindestens 1:100 beträgt.

5. Verfahren gemäß Anspruch 1, **dadurch gekennzeichnet, daß** das Lösungsmittel und der Non-Solvent anschließend aus der resultierenden Suspension verdampft werden.

## Claims

1. Method for producing microparticles or nanoparticles of water-soluble and water-insoluble substances by controlled precipitation, co-precipitation and self-organization processes in microjet reactors, a solvent, which contains at least one target molecule, and a nonsolvent being mixed as jets that collide with each other in a microjet reactor at defined pressures and flow rates to effect very rapid precipitation, co-precipitation or a chemical reaction, during the course of which microparticles or nanoparticles are formed, **characterised in that** particle size is controlled by the temperature at which the solvent and nonsolvent collide, the flow rate of the solvent and the nonsolvent and/or the gas pressure in the reactor space of the microjet reactor, smaller particle sizes being obtained at lower temperatures, at high solvent and nonsolvent flow rates and/or by reducing of the gas pressure in the reactor space.

2. Method according to claim 1, **characterised in that** the target molecule is selected from the group consisting of biologically useful substances, imaging substances, cosmetic substances, colorants, pigments, food substances, food additives, dietary supplements, biocides, insecticides, fungicides, pesticides, herbicides, pharmaceutically useful substances, in particular human drugs or veterinary drugs.

3. Method according to claim 1, **characterised in that** the non-solvent contains at least one auxiliary agent.

4. Method according to claim 3, **characterised in that** the weight ratio of target molecule to auxiliary agent is at least 1:100.

5. Method according to claim 1, **characterised in that** the solvent and the nonsolvent are subsequently removed from the resulting suspension by vaporizing them.

## Revendications

1. Procédé de préparation de micro ou nanoparticules de substances solubles dans l'eau et insolubles dans l'eau par précipitation contrôlée, co-précipitation et processus d'auto-organisation dans des réacteurs à micro-jets, un solvant contenant au moins une molécule cible et un non-solvant étant mélangés dans un réacteur à micro-jets à des pressions et des débits définis en tant que faisceaux entrant en collision l'un avec l'autre, une précipitation très rapide, une co-précipitation ou une réaction chimique ayant lieu dans le cadre de laquelle des micro ou nanoparticules sont formées, **caractérisé en ce que** la taille des particules des micro ou nanoparticules produites est contrôlée par la température à laquelle se réalise la collision entre le solvant et le non-solvant, par le débit du solvant et du non-solvant et/ou par la pression du gaz dans la chambre du réacteur du réacteur à micro-jets, des tailles de particule plus petites étant obtenues à des températures inférieures, des débits élevés de solvant et de non-solvant ou par réduction de la pression du gaz dans la chambre du réacteur.

2. Procédé selon la revendication 1, **caractérisé en ce que** la molécule cible est choisie dans le groupe constitué par les substances biologiquement utiles, les substances d'imagerie, les substances cosmétiques, les colorants, les pigments, les denrées alimentaires, les additifs alimentaires, les compléments alimentaires, les biocides, les insecticides, les fongicides, les pesticides, les herbicides, les substances pharmaceutiquement utiles, en particulier les médicaments pour l'homme ou les médicaments vétérinaires.

3. Procédé selon la revendication 1, **caractérisé en ce que** le non-solvant contient au moins un additif auxiliaire.

4. Procédé selon la revendication 3, **caractérisé en ce que** le rapport pondéral de la molécule cible par rapport à l'additif auxiliaire est d'au moins 1:100.

5. Procédé selon la revendication 1, **caractérisé en ce que** le solvant et le non-solvant sont ensuite évaporés de la suspension résultante.
